# DEMANDE DE BREVET EUROPEEN

(11) **EP 1 465 080 A2**
(43) Date de publication de la demande: **06.10.2004**
(21) Numéro de dépôt: 03293124.8
(22) Date de dépôt: 12.12.2003
(51) Int. Cl.: G06F 17/18, G05B 9/02, G05B 23/02

(54) **Procédé de conception d'un système tolérant aux fautes**

(30) Priorité: 13.12.2002 FR 0216335
(71) Demandeur: Renault s.a.s., 92100 Boulogne Billancourt (FR)
(72) Inventeur: Boutin, Samuel, 78114 Magny Les Hameaux (FR)
(74) Mandataire: Davies, Owen Robert Treharne

(57) **Abrégé**

L'invention concerne un procédé de conception d'un système tolérant aux fautes caractérisé en ce que :
les exigences de tolérance aux fautes sont déterminées itérativement pour chaque fonction suivant les étapes :
   on spécifie des niveaux de tolérance aux fautes aux différents actionneurs du système,
   on détermine automatiquement l'ensemble des fonctions pour lesquelles les exigences de tolérance aux fautes ne sont pas entièrement spécifiées, c'est à dire celles pour lesquelles des sorties ont été affectées de caractéristiques de tolérance et qui n'ont pas encore été traitées dans une des étapes précédentes,
   pour chaque fonction de l'ensemble calculé en b), on procède à une analyse spécifique pour déterminer :
      i) quelles sont les entrées sur lesquelles les caractéristique de tolérance aux fautes doivent être exigées,
      ii) quelle est l'exigence de tolérance aux fautes sur ladite fonction,
   on itère les étapes b) puis c) jusqu'à ce que l'ensemble déterminé à l'étape b) soit vide et on place sur une architecture matérielle un architecture fonctionnelle résultant de l'analyse de tolérance aux fautes.

## Description

La présente invention est relative à procédé de conception d'un système tolérant aux fautes.

On connaît des ensembles de systèmes électroniques de ce type, conçus notamment pour équiper des véhicules automobiles. Un tel véhicule comprend couramment plusieurs systèmes assurant chacun l'exécution d'une prestation telle que la commande du moteur propulsant le véhicule, la gestion de la climatisation de l'habitacle, la gestion des liaisons du véhicule au sol (e.g. freinage, suspension), la gestion de communications téléphoniques.

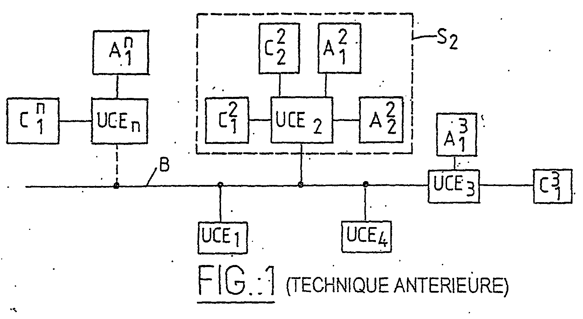

On a schématisé à la figure 1 du dessin annexé les composants matériels de l'ensemble de ces systèmes. Ces composants comprennent essentiellement des unités de commande électroniques ou "calculateurs" UCEₘ, chaque calculateur étant éventuellement connecté à des capteurs Cⁿᵢ et à des actionneurs A^{m}_{j'} tous les calculateurs étant connectés à au moins un même bus B pour y émettre ou recevoir des informations par exemple multiplexées, en provenance ou à destination des autres calculateurs connectés au bus B.

Ce multiplexage est obtenu notamment, comme cela est bien connu pour le bus CAN par exemple, en introduisant les informations en cause dans des messages matérialisés par des trames de signaux numériques.

A titre d'exemple illustratif, le système S₂ de "commande du moteur" comprend le calculateur UCE₂, plusieurs capteurs C²ᵢ sensibles à des grandeurs telles que le régime du moteur, à combustion interne par exemple, la pression au collecteur d'admission de ce moteur, la pression de l'air extérieur, la température de l'eau de refroidissement du moteur, celle de l'air, l'état de charge de la batterie, et plusieurs actionneurs A²ⱼ. Le calculateur UCE₂ est dûment programmé pour exécuter plusieurs fonctions de commande du moteur telles que : la régulation de ralenti, la régulation de la richesse du mélange air/carburant, le réglage de l'avance à l'allumage de ce mélange et la recirculation des gaz d'échappement. Pour ce faire le calculateur UCE₂ exploite des informations venues des capteurs C²ᵢ précités et élabore des signaux de commande des actionneurs A²ⱼ constitués par une vanne de commande d'air additionnel et une bobine d'allumage de bougie pour la fonction "régulation de ralenti", un injecteur de carburant pour la fonction "régulateur de richesse", la même bobine d'allumage pour la fonction "avance de l'allumage" et une vanne pour la fonction "recirculation de gaz d'échappement".

Les autres "prestations" évoquées ci-dessus, "climatisation de l'habitacle", "liaison avec le sol", "condamnation/décondamnation du véhicule" sont exécutées par des systèmes d'architecture analogue à celle présentée ci-dessus pour la commande du moteur.

Tous ces systèmes mis en communication par un même bus B constituent un réseau multiplexé. On conçoit alors que plusieurs fonctions relevant de systèmes différents peuvent exploiter des informations issues de mêmes capteurs, par exemple, ce qui évite de coûteuses redondances dans la structure de l'ensemble des systèmes. L'utilisation d'un réseau multiplexé permet aussi de réduire de manière très importante la longueur des lignes électriques interconnectant les différents éléments de l'ensemble. Un tel ensemble multiplexé permet aussi la mise en place de fonctions non classiques et éventuellement complexes, faisant intervenir parfois plusieurs systèmes et dites pour cette raison "transversales". A titre d'exemple illustratif et non limitatif, la perception de l'information "sac d'air (ou "airbag") déclenché", significative de ce que le véhicule a subi un choc, peut être traitée alors de manière à commander l'émission d'un appel au secours par un dispositif de téléphonie mobile embarqué dans le véhicule.

Pour certains systèmes, dits critiques, c'est à dire dont une défaillance peut porter atteinte à la sécurité des personnes, la conception et particulièrement le diagnostic des défauts de fonctionnement revêt une importance particulière en ce que les éventuelles erreurs doivent être absolument mises en évidence et la mise en oeuvre de mesures correctives doit se faire sûrement et parfois sans que le système ne cesse de fonctionner. On parle alors de systèmes tolérants aux fautes. La tolérance aux fautes signifie que le système doit fonctionner même si une faute, par exemple une panne d'un capteur ou d'un actionneur, apparaît.

Les exigences de tolérance aux fautes, les types de faute et ce qu'elles impliquent en terme de redondance sont des éléments bien connus lorsque l'on considère des problèmes très ciblés comme par exemple la synchronisation d'horloge entre calculateurs redondés, la transmission d'un message entre deux processus.

Une telle exigence peut être spécifiée de manière plus ou moins précise. De manière la plus simple qui soit, la tolérance à une faute signifie que si seule une faute (quelconque) est observée, alors le système doit continuer à fonctionner.

Les fautes sont par exemple une erreur d'exécution d'un processus sur une cible matérielle (détectée par exemple par un test de redondance cyclique ( dit *"Cyclic Redundancy Check"*), un fil coupé, un court-circuit, un bus de communication défectueux, une mauvaise synchronisation lors d'un envoi ou d'une réception de message.

Les fautes ont des caractéristiques temporelles, leur durée, leur probabilité d'occurrence, leur caractère prévisible ou imprévisible, leur caractère continu ou transitoire.

A chaque faute peuvent correspondre des mesures correctives spécifiques visant à réduire sa probabilité d'occurrence et/ou de nuisance. Ces mesures correctives correspondent souvent à une redondance dans le temps ou l'espace d'une exécution de programme ou d'un flot de données. Si l'on veut tolérer une erreur transitoire d'exécution d'un programme sur un processeur, une solution consiste à exécuter plusieurs fois ledit programme. Si l'on veut tolérer la coupure d'un bus sur lequel circule une donnée critique, il faut redonder ledit bus afin que la dite donnée puisse circuler par deux chemins indépendants afin de continuer à être transmise en cas d'indisponibilité d'un des deux bus.

Evidemment, toute solution au problème de la tolérance aux fautes se traduit par un coût de développement et de ressources supplémentaires et paradoxalement par une plus grande exposition aux fautes, puisque par exemple deux processus ont plus de chance d'être affectés par une faute qu'un seul. Cependant, l'exposition supplémentaire de deux bus en comparaison d'un seul à une panne est largement compensée par la petitesse du produit des probabilités que chaque bus tombe en panne, produit qui représente le cas où les deux bus tombent en panne en même temps, en comparaison de la probabilité de défaillance d'un unique bus.

Les fautes des différents composants d'une architecture fonctionnelle et/ou matérielle étant déterminées, plusieurs niveaux de réponse peuvent être apportés :
- un composant sans garantie de tolérance aux fautes peut émettre une donnée erronée dans n'importe quel contexte,
- un composant silencieux en cas d'occurrence d'une faute ("*Fail Silent*") est un composant qui émet une donnée correcte ou qui, s'il est affecté par au plus une faute, n'émet rien
- un composant silencieux en cas d'occurrence de deux fautes est un composant qui émet une donnée correcte ou rien s'il est affecté par au plus deux fautes,
- un composant tolérant à une faute est un composant qui émet une donnée correcte s'il est affecté par au plus une faute,
- on étend sans peine ces définitions à la tolérance d'un nombre arbitraire de pannes,

On appelle "niveau de tolérance aux fautes" d'un composant, le niveau de réponse nécessaire pour satisfaire aux exigences de tolérances aux fautes dudit composant.

La tolérance aux fautes peut être exprimée de manière probabiliste. On peut, par exemple, exiger qu'un composant soit tolérant à au plus deux fautes avec une probabilité d'échec de la tolérance de 10⁻⁹ par heure de fonctionnement. Dans ce cas, les caractéristiques de probabilité de panne des composants matériels qui sont mis en oeuvre sont exploitées pour l'analyse. Par exemple, on connaît la probabilité d'un défaut de connexion d'une pine, ou broche, dans un connecteur.

Pour ce qui est des applications tolérantes aux fautes existantes, on peut citer le cas d'un avion de ligne à réaction qui s'il perd un de ses réacteurs doit encore pouvoir se poser dans de bonnes conditions.

Dans l'état de l'art, la tolérance aux fautes se travaille en essayant de déterminer une architecture matérielle tolérante aux fautes, après une analyse fonctionnelle préliminaire, puis en menant le développement sur l'architecture figée.

Cette approche pose plusieurs problèmes.

Tout d'abord, la complexité de l'analyse résultant du fait que l'on aborde l'ingénierie système en "un bloc". Par exemple, des formalismes récents comme le bus critique TTP prétendent être une solution à la mise en oeuvre de systèmes tolérants aux fautes, le processus proposé étant de développer un systèmes tolérant aux fautes autour d'une architecture de calculateur et d'un réseau TTP déjà établi avec ses propres outils. La question du développement logiciel se pose ensuite.

Ensuite, le manque de rigueur résultant de cette complexité oblige à mélanger de nombreux concepts différents. Par exemple, un bus temporel de communication comme le produit TTP ayant été choisi, ce bus contient intrinsèquement un certain niveau de redondance, mais les calculateurs connectés au bus n'ont pas de redondance à priori, de même l'exécution de logiciels sur ces dits calculateurs n'est pas tolérante à priori.

Finalement, et c'est peut être le plus important, les approches existantes proposent une architecture matérielle dite "tolérante aux fautes" en amont d'un développement de l'application. De la sorte, la réutilisation de fonctions critiques d'une architecture matérielle vers une autre est compromise dès le début de l'étape de conception.

Pour répondre à ces problèmes, l'inventeur propose que l'on pouvait raisonner par couches en séparant:
- une première étape de spécification de tolérance aux fautes à un niveau application qui débouche sur une architecture fonctionnelle faisant intervenir des capteurs des actionneurs et des fonctions ;
- une deuxième étape de spécification des exigences de tolérances aux fautes de l'architecture fonctionnelle résultant de la première étape ;
- une étape de raffinement des exigences de tolérances au fautes des deux étapes précédentes lors du placement sur une architecture électrique électronique pour obtenir les exigences de tolérance aux fautes de l'architecture fonctionnelle et matérielle résultante.

Pour reprendre l'exemple d'un avion bi-réacteurs, les exigences de tolérance aux fautes au niveau application sont que l'avion doit pouvoir fonctionner avec les deux réacteurs ou avec un seul des ses réacteurs, qu'il s'agisse du gauche ou du droit. On fait de plus l'hypothèse qu'aucune réponse n'existe si les deux réacteurs ne fonctionnent plus, auquel cas aucun comportement n'est garanti.

Dans la première étape, le traitement des exigences de tolérance aux fautes au niveau fonctionnel fait apparaître par exemple trois fonctions de commande "Fnormal", "Fgauche" et "Fdroit", chacune de ces fonctions prenant en entrée des données provenant de nombreux capteurs et commandant pour "Fnormal" l'alimentation en carburant des deux réacteurs, pour "Fgauche" l'alimentation du réacteur gauche et pour "Fdroit" l'alimentation du réacteur droit. Notons qu'à la fin de cette étape, on fait l'hypothèse que les fonctions "Fnormal", "Fgauche" et "Fdroit" ont elles-mêmes un comportement garanti et c'est la validation de cette hypothèse qui motive la seconde étape.

Dans la seconde étape, si l'on veut maintenant traiter les exigences de tolérance aux fautes au niveau de l'architecture fonctionnelle des capteurs, actionneurs, alimentations et fonctions, il faut que les fonctions "Fnormal", "Fgauche", "Fdroit" répondent chacune aux mêmes exigences de tolérance aux fautes ou à des exigences déduites de celles du niveau application. Notons qu'en effet, il ne sert à rien de prévoir des mécanisme complexes de vol avec un seul réacteur si la fonction qui commande le bon fonctionnement des deux réacteurs n'est elle-même pas sûre. Ceci va impliquer un certain niveau de redondance des capteurs, actionneurs, alimentations et fonctions comme précisé plus loin dans la description. Il est important de noter que cette affectation de tolérance aux fautes des capteurs, actionneurs, alimentations et fonctions est complètement indépendante de l'étape précédente.

Dans la troisième étape, au moment du placement des différentes fonctions sur une architecture matérielle, c'est à dire en précisant quels calculateurs, bus de communication et autres éléments de connectique vont mettre en oeuvre les fonctions "Fnormal", "Fgauche", "Fdroit", il faut vérifier que ladite architecture matérielle satisfait bien aux exigences de tolérance aux fautes des différents capteurs, actionneurs et fonctions mis en oeuvre ou, de manière duale, déduire dudit placement les exigences de tolérance aux fautes sur les composants de l'architecture matérielle qui devront alors être redondés de manière idoine.

Notons que l'énergie peut être considérée comme une donnée et la batterie, comme un calculateur procurant les données du type énergie.

Finalement, il faut préciser que, dans la gestion des exigences de tolérance aux fautes, la prise en compte du facteur temps n'a pas besoin d'être spécifiée, bien que le système décrit puisse être temps-réel et même temps-réel dur. Du reste, elle peut être traitée séparément, par exemple, en associant à chaque donnée, un entier qui caractérise un moment de saisie, un âge approché de la donnée dans un cadre "asynchrone" ou en prenant l'hypothèse dite "synchrone" que toutes les opérations sont réalisées en un temps nul ou négligeable. A posteriori, une fois le design terminé, les processeurs et bus de communication doivent bien sûr être dimensionnés pour répondre aux exigences temporelles de l'application tolérante aux fautes spécifiée, le retard d'un message pouvant être assimilé à une absence de message par un consommateur dudit message.

Finalement, cette réponse aux problèmes énoncés ci-dessus permet une mise eu oeuvre économique dans la mesure où, dans chacune des étapes, on met en oeuvre la tolérance aux fautes au juste nécessaire, chaque copie ou réplicat étant dûment justifié pour chaque fonction.

Pour permettre la mise en oeuvre au juste nécessaire de la tolérance aux fautes sur une application critique, l'invention vise donc un procédé de conception d'un système tolérant aux fautes caractérisé en ce que les exigences de tolérance aux fautes sont déterminées itérativement pour chaque fonction suivant les étapes:
a) on spécifie des niveaux de tolérance aux fautes aux différents actionneurs du système,
b) on détermine automatiquement l'ensemble des fonctions pour lesquelles les exigences de tolérance aux fautes ne sont pas entièrement spécifiées, c'est à dire celles pour lesquelles des sorties ont été affectées de caractéristiques de tolérance et qui n'ont pas encore été traitées dans une des étapes précédentes,
c) pour chaque fonction de l'ensemble calculé en b), on procède à une analyse spécifique pour déterminer:
   i) quelles sont les entrées sur lesquelles les caractéristiques de tolérance aux fautes doivent être exigées,
   ii) quelle est l'exigence de tolérance aux fautes sur ladite fonction,
d) on itère les étapes b) puis c) jusqu'à ce que l'ensemble déterminé à l'étape b) soit vide; et
e) on place sur une architecture matérielle un architecture fonctionnelle résultant de l'analyse de tolérance aux fautes.

Grâce à ce procédé, on peut spécifier localement, pour chaque fonction, des exigences de tolérance aux fautes qui permettront si elles sont toutes satisfaites d'atteindre le niveau de tolérance aux fautes de l'ensemble.

Pour chaque faute on peut mettre en oeuvre un mesure corrective spécifique visant à réduire sa probabilité d'occurrence et/ou de nuisance.

On peut vérifier que ladite architecture matérielle satisfait bien aux exigences de tolérance aux fautes des différents capteurs, actionneurs et fonctions mis en oeuvre ou, de manière duale, déduire dudit placement les exigences de tolérance aux fautes sur les composants de l'architecture matérielle qui devront alors être redondés de manière idoine.

Dans la gestion des exigences de tolérance aux fautes, on peut ignorer la prise en compte du facteur temps, bien que le procédé puisse être réalisé en temps-réel et de préférence en temps-réel dur.

On peut appliquer le procédé à la conception ou au diagnostic d'un système électrique/électronique prévu pour équiper un véhicule automobile.

Dans le cadre d'un placement sur une architecture matérielle de l'architecture fonctionnelle résultant de l'analyse de tolérance aux fautes, on peut respecter les exigences de liberté, les éléments placés devant satisfaire aux mêmes exigences de liberté que les éléments avant placement.

On peut utiliser des réplicats des différents objets pour vérifier que les conditions de liberté sont satisfaites. Les réplicats (anglais "replicas") sont par exemple des copies des fichiers et des documents faites sur des machines comme outils de diagnostic ou informatique.

Selon d'autres caractéristiques particulières, dans le procédé succinctement exposé ci-dessus,
i) étant donnée une exigence de tolérance aux fautes sur l'architecture fonctionnelle et une mise en oeuvre de cette tolérance aux fautes, notamment par des copies, pour au moins un flot de données et/ou au moins une fonction et/ou au moins un capteur et/ou au moins un actionneur et étant donné un placement de l'architecture fonctionnelle sur une architecture matérielle comportant des calculateurs et une connectique,
ii) pour au moins un flot de données et/ou au moins une fonction, on détermine s'il existe un défaut des composants après placement du fonctionnel sur le matériel pouvant affecter deux copies d'un même composant, auquel cas le placement ne satisfait pas les exigences de tolérance aux fautes.

Grâce à ces dispositions, on peut réaliser une architecture matérielle qui satisfait les exigences de tolérance aux fautes spécifiées sur l'architecture fonctionnelle lorsque ces exigences sont exprimées en nombre de fautes à tolérer.

Selon des caractéristiques particulières, dans le procédé succinctement exposé ci-dessus,
i) étant donnée une exigence de tolérance aux fautes sur l'architecture fonctionnelle et une mise en oeuvre de cette tolérance aux fautes, notamment par des copies, pour au moins un flot de données et/ou au moins une fonction et/ou au moins un capteur et/ou au moins un actionneur, et étant donné un placement de l'architecture fonctionnelle sur une architecture matérielle comportant des calculateurs, une connectique et des caractéristiques de tolérance aux fautes de ces composants,
ii) pour au moins un flot de données et/ou au moins une fonction, on détermine si on a placé plus de copies sur un composant que son niveau de tolérance aux fautes ne peut supporter.

Grâce à ces dispositions, on peut réaliser une architecture matérielle qui satisfait les exigences de tolérance aux fautes spécifiées sur l'architecture fonctionnelle lorsque ces exigences sont exprimées en nombre de fautes à tolérer dans un laps de temps prédéfini, ou par une probabilité.

L'invention fourni aussi un article de commerce comportant une mémoire lisible par un ordinateur, un programme exécutable par un ordinateur étant enregistré sur ladite mémoire pour la conception d'un système tolérant aux fautes, caractérisé en ce que le programme inclut un codage pour:
a) spécifier des niveaux de tolérance aux fautes aux différents actionneurs du système,
b) déterminer automatiquement l'ensemble des fonctions pour lesquelles les exigences de tolérance aux fautes ne sont pas entièrement spécifiées, c'est à dire celles pour lesquelles des sorties ont été affectées de caractéristiques de tolérance et qui n'ont pas encore été traitées dans une des étapes précédentes,
c) pour chaque fonction de l'ensemble calculé en (b), analyser de façon spécifique pour déterminer:
   i) quelles sont les entrées sur lesquelles les caractéristiques de tolérance aux fautes doivent être exigées,
   ii) quelle est l'exigence de tolérance aux fautes sur ladite fonction; et
   iii) on itère les étapes b) puis c) jusqu'à ce que l'ensemble déterminé à l'étape b) soit vide.

L'invention fourni aussi un outil informatique programmé à la conception et/ou à l'automatisation des étapes du procédé l'invention ou programmé en utilisant un article de commerce selon l'invention.

D'autres buts, caractéristiques et avantages de la présente invention apparaîtront à la lecture de la description qui va suivre et à l'examen du dessin annexé dans lequel :
- la figure 1 est un schéma d'un ensemble de systèmes électroniques qu'on se propose de doter de moyens de diagnostic de défauts de fonctionnement suivant la présente invention, cet ensemble étant décrit dans le préambule de la présente description et,
- la figure 2 illustre le placement d'une architecture fonctionnelle sur une architecture matérielle,
- la figure 3 illustre les étapes d'étiquetage par des exigences de tolérance aux fautes d'une architecture puis un mode de réalisation de ces exigences,
- la figure 4 illustre les mêmes étapes ainsi que le raffinement des exigences de tolérance aux fautes lors du placement sur une architecture matérielle,
- la figure 5 illustre la stabilité de l'étiquetage de tolérance aux fautes par composition fonctionnelle et
- la figure 6 illustre le processus de conception d'une architecture tolérante aux fautes visée par cette invention

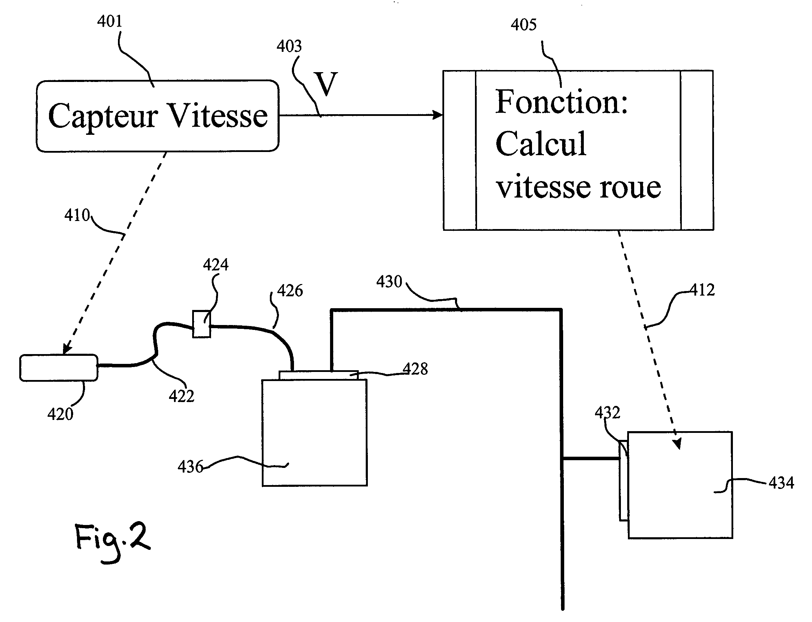

En figure 2, la fonction "Calcul vitesse roue" 405 consomme une donnée brute "V" 403, provenant du capteur vitesse roue 401.

Dans un mode de réalisation particulier, le capteur vitesse 420 est rattaché à un calculateur 436 et la fonction "Calcul vitesse roue" 405 est réalisée par un processus exécuté sur un autre calculateur 434.

La transformation du capteur vitesse 401 d'une architecture fonctionnelle en capteur vitesse 420 d'une architecture matérielle est symbolisé par la flèche 410. De même, l'implantation de la fonction "Calcul vitesse roue" 405 de l'architecture fonctionnelle sur le calculateur 434 est symbolisé par la transformation 412. On note que le flot de données entre le capteur vitesse 401 et la fonction "Calcul vitesse roue" 405 est transformé en un chemin complexe de l'architecture matérielle impliquant :
- deux calculateurs 436 et 434 et leur connecteurs respectifs 428 et 432,
- un réseau 430,
- des liaisons filaires 422 et 426 et
- un connecteur de faisceaux 424

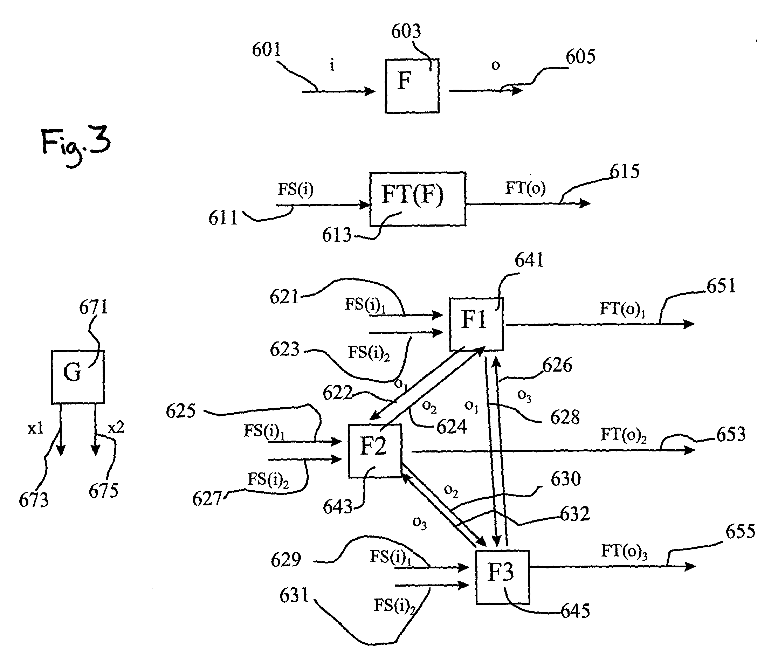

En Figure 3, on décrit une fonction F 603 ayant au moins un flot d'entrée "i" 601 et un flot de sortie "o" 605. D'autres données d'entrées ou de sortie ne sont pas décrites pour la simplicité de la description.

On décrit d'autre part, avec les objets 611 à 615, comment les entrées et sorties de F et F elle-même peuvent être affectés d'attributs de tolérance aux fautes. On note "FT(F)" (613) la fonction F affectée d'une exigence de tolérance aux fautes., "FT(o)" (615) la donnée "o" affectée d'une exigence de tolérance aux fautes et "FS(i)" (611) la donnée "i" affectée d'une exigence de silence en cas de faute.

Suivant le processus décrit dans l'invention, l'exigence FT(o) provient à un moment donné du procédé, d'une exigence de tolérance aux fautes sur la donnée "o" déterminée par un consommateur de cette donnée. Dans la Figure 3, le concepteur a déduit de cette première exigence que F elle-même devait être tolérante aux fautes et que l'entrée "i" devait être silencieuse en cas de défaut.

Dans une étape ultérieure du procédé décrit ici, on voit, toujours en figure 3, avec les objets 621 à 655, comment les exigences de tolérance aux fautes sur la fonction F et ses entrées/sorties se traduisent par des réplicats ou copies d'exécution de la fonction F elle-même et des différents flots de données d'entrée et sortie. Dans l'exemple, on prend l'hypothèse que les différentes fautes que l'on tolère sont symétriques et donc on construit trois réplicats d'un objet tolérant aux fautes et deux réplicats d'un objet silencieux en cas de faute, d'où une solution possible représentée en figure 3 où F1 641, F2 643 et F3 645 sont des réplicats de la fonction F, les flots FT(o)₁ 651, FT(o)₂ 653, FT(o)₃ 655 sont des réplicats du flot "o", les flots FS(i)₁ 621, 625, 629 et FS(i)₂ 623, 627, 631 sont des réplicats du flot d'entrée "i".

On note que, dans le mode de réalisation choisit dans cet exemple, le flot FT(o)₁ est calculé en fonction des réplicats "o₂"(624) et "o₃"(626) de "o" provenant des exécutions de F₂ et F₃ d'une part et de l'exécution de F₁ d'autre part. Dans un mode de réalisation particulier, "o₂"(624) et "o₃"(626) sont utilisés notamment pour vérifier que le calcul de F₁ s'est déroulé de manière synchronisée avec F₂ et F₃. En effet, la description des flots de données ne présage pas d'un mode de réalisation synchrone ou asynchrone et il faut alors que les exécutions de F₁, F₂ et F₃ soient suffisamment rapprochées dans le temps pour répondre aux exigences fonctionnelles de la fonction F. Exécuter deux copies de F avec des données d'entrées qui correspondraient à des échantillonnage très distants dans le temps n'aurait aucun sens.

On dira que des réplicats d'un objet sont libres si on ne peut pas en trouver deux qui puissent être affectés par une faute commune. En cela l'exemple de la fonction G en figure 3, objets 671 à 675, montre un cas où deux flots de données x1 673 et x2 675 sont liés car un défaut de la fonction G 671 impacte potentiellement x1 et x2.

Associé à la mise en oeuvre de la tolérance aux fautes de la fonction F, ont déduit un certain nombre de conditions supplémentaires qu'il sera nécessaire de valider dans les étapes ultérieures de conception.

D'abord, dans tout mode de réalisation, les flots FT(o)₁ 651, FT(o)₂ 653 et FT(o)₃ 655 doivent rester libres, c'est à dire qu'il ne faut pas qu'une erreur dans le flot de données en amont puisse impacter à la fois deux de ces trois flots.

De même,
- FS(i)₁et FS(i)₂ doivent être libres,
- F₁, F₂, F₃ doivent être libres,
- les échanges de "o₁" à destination de F₂ (622)et à destination de F₃ (628) doivent être libres,
- idem pour les échanges de "o₂" et "o₃" provenant respectivement de F₂ et F₃, c'est à dire respectivement (624) et (630) d'une part, (632) et (626) d'autre part.

D'autres mises en oeuvres de la tolérance aux fautes sont possibles et l'on peut déterminer alors les contraintes associées. On peut par exemple envisager 4 réplicats pour la fonction F au lieu de 3 dans notre exemple, les exigences évoluant en fonction du mode de réalisation.

Dans le cadre d'un placement sur une architecture matérielle de l'architecture fonctionnelle résultant de l'analyse de tolérance aux fautes, constituée des éléments 621 à 655, ce placement doit respecter les exigences de liberté listées ci-dessus, c'est à dire que les éléments placés doivent satisfaire aux mêmes exigences de liberté que les éléments avant placement.

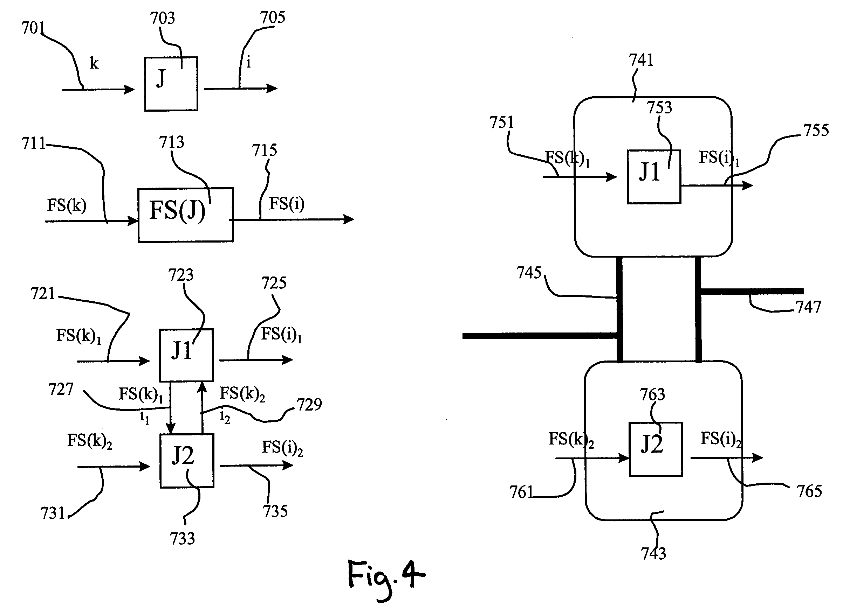

En Figure 4, on illustre, de la même manière qu'en figure 3, les différentes étapes de l'analyse de tolérance aux fautes mais dans le cas d'une fonction dont la sortie a pour exigence d'être silencieuse en cas de faute.

Dans la première étape, objets 701 à 705, on décrit l'interface d'une fonction J 703 ayant un flot de données d'entrée "k" 701 et un flot de données de sortie "i" 705.

Dans la seconde étape, objets 711 à 715, suite à l'analyse remontante de tolérance aux fautes depuis les actionneurs jusqu'aux capteurs du système, des attributs de tolérance aux fautes ont été attribués à la fonction J et à ses flots d'entrée (711) et de sortie (715). FS(J) 713 est une indication que J doit être un processus silencieux en cas de défaut.

Dans la troisième étape, objets 721 à 735, on propose un mode de réalisation de la tolérance aux fautes avec, comme en figure 3, des réplicats des différents objets. Ces réplicats sont affectés de conditions de liberté et notamment, à titre d'exemple, la condition que les flots de données i₁ et i₂ soient libres, et que les processus J₁ et J₂ soient libres.

Dans la quatrième étape, celle du placement, le processus J₁ est exécuté sur un calculateur 741 et le processus J₂ est exécuté sur un autre calculateur 743. Dans ces conditions l'exécution de J₁ et J₂ est bien libre et la condition de liberté au niveau fonctionnel est bien satisfaite dans le mode de réalisation. Si par contre, les flots de données "i₁" et "i₂" circulent tous deux sur le bus 745 par décision du concepteur, la condition de liberté des flots "i₁" et "i₂" n'est pas satisfaite car un défaut du bus peut créer une erreur sur ces deux flots. Il faudra donc pour répondre aux exigences de tolérance aux fautes, faire circuler par exemple le flot de données "i₁" sur le bus 745, et le flot de données "i₂" sur le bus 747.

Notons que lors du placement, on procède bien à un raffinement des exigences de tolérance aux fautes. Par exemple, la condition que les flots "i₁" et "i₂" soient libres devient après placement que les mises en oeuvre respectives de chacun de ces flots lors du placement soient libres.

Si maintenant, on dispose de données probabilistes, le problème de la tolérance aux fautes est résolu de manière plus précise. Les conditions de liberté s'expriment maintenant avec des probabilités.

Si "p" est la probabilité maximale pour laquelle les flots de données "i₁" et "i₂" peuvent être affectés par une faute commune suite à l'analyse de tolérance aux fautes pour un laps de temps de référence, la probabilité "p" est représentative du degré de liberté des flots de données "i₁" et "i₂". Alors si les flots de données "i₁" et "i₂" circulent sur un bus dont la probabilité de panne est inférieure à "p", il n'y a aucun problème. Si au contraire la probabilité de panne "p1" du bus 745 et la probabilité de panne "p2" du bus 747, sont telles que le produit p1*p2 est supérieur à "p", alors même en faisant circuler le flot de données "i₁" sur le bus 745 et le flot de données "i₂" sur le bus 747, on n'atteint pas l'objectif de tolérance aux fautes et le concepteur doit envisager un mode de réalisation plus fiable.

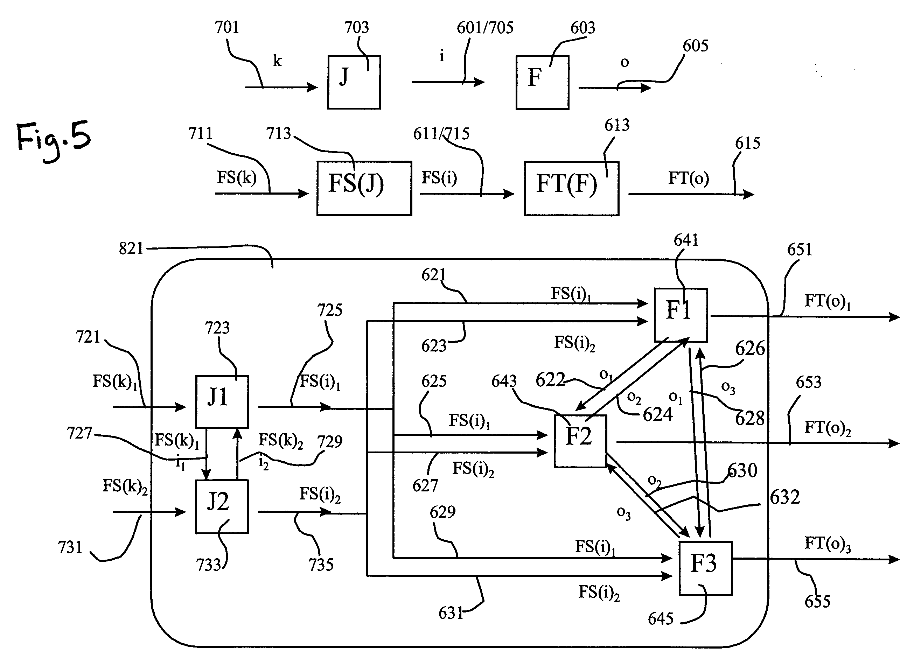

En figure 5, on montre comment la propagation des contraintes de tolérance aux fautes est stable par composition fonctionnelle. Cela illustre comment la gestion des réplicats peut se faire au niveau de chaque fonction et comment l'intégrité du placement par rapport aux exigences de tolérance aux fautes peut se traiter au niveau de chaque fonction, puis pour un ensemble de fonctions.

Les exemples des figures 3 et 4 sont repris pour les deux premières étapes, composants 601 à 605 et 701 à 705 puis composants 611 à 615 et 711 à 715 pour montrer comment une analyse locale à chaque fonction reste pertinente lorsque l'on examine les échanges entre deux fonctions, et par extension entre un capteur et une fonction ou entre une fonction et un actionneur. On note l'identification des flots de donnée 601 et 705 au moment de la composition, puisqu'on s'aperçoit que "i" appartient à la fois au producteur et au consommateur du flot. Il faut noter que si plusieurs consommateurs existent, c'est le plus exigent des consommateurs qui fixe le nombre de réplicats. Si trois réplicats d'une donnée sont disponibles et qu'une fonction n'a pas d'exigence de tolérance aux fautes sur ce flot, elle en choisit un.

Le contour 821 en figure 5 illustre la composition au niveau fonctionnel des solutions retenues pour les fonctions F et J décrite en figures 3 et 4.

On note que comme pour le flot de données "i", mentionné ci-dessus, les flots 725 d'une part et 621, 625 et 629 d'autre part sont identifiés, de même que les flots 735 et 623, 627, 631.

Les exigences de liberté pour la composée des fonctions F et J est la réunion des exigences de liberté pour la fonction F et des exigences de liberté pour la fonction J.

De cette manière on conçoit itérativement toute l'architecture fonctionnelle tolérante aux fautes intégrant les réplicats nécessaires, à partir d'une architecture fonctionnelle à laquelle on a attaché des attributs de tolérance aux fautes.

Pour conclure sur la composition des fonctions, notons qu'un flot de données émis par une fonction hérite du niveau de tolérance le plus élevé imposé par les fonctions consommatrices dudit flot. Dès lors si deux fonctions M et N sont consommatrices d'un flot de données f et si par ailleurs M impose que f soit tolérant aux fautes alors que N n'impose aucune contrainte de tolérance aux fautes, alors, si par exemple f possède trois réplicats pour répondre aux contraintes de M, N peut très bien ne consommer que l'un de ces trois réplicats par soucis d'économie. Une fois le placement effectué, il est judicieux de choisir pour N le réplicat dont la mise en oeuvre est la moins coûteuse, par exemple, ou la plus sûre suivant le(s) critère(s) que l'on souhaite optimiser.

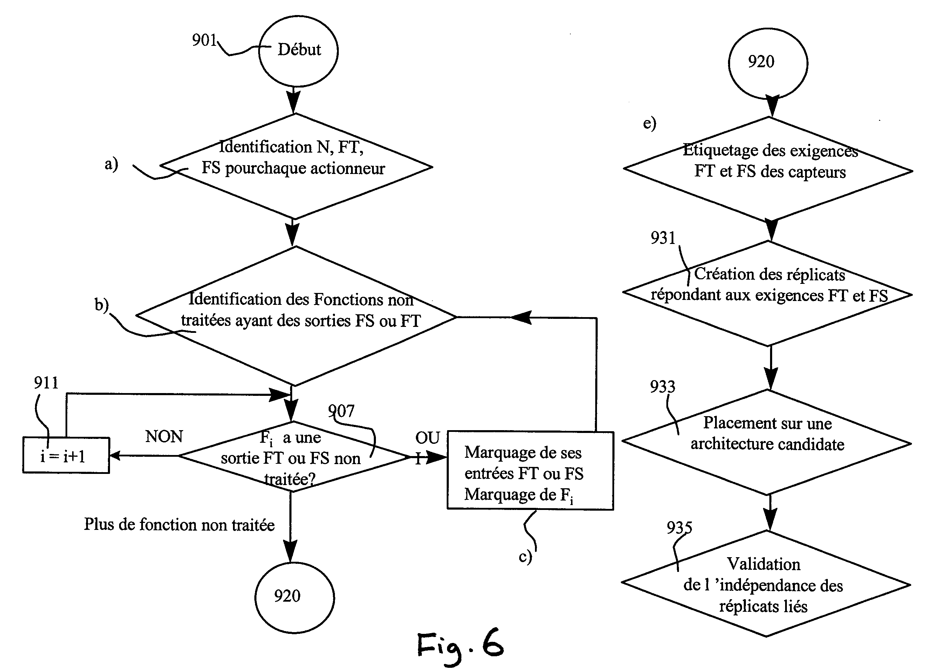

En Figure 6, on décrit le processus de conception d'une architecture tolérante aux fautes.

Etant donnée au début 901 une architecture fonctionnelle composée de capteurs (logiques), de fonctions et d'actionneurs. Certaines fonctions peuvent symboliser des alimentations. Les flots de données décrit ici peuvent être, par exemple, un courant continu dans un fil.

On identifie dans l'étape a) les actionneurs qui ont des missions critiques et l'homme du métier indique les caractéristiques de leur commande: tolérance aux fautes si la commande est critique et nécessaire, silence en cas de défaut si l'actionneur peut être stoppé en cas de défaut, rien si aucune exigence n'est spécifiée. Par exemple un feu de signalisation n'a peut-être pas besoin d'être tolérant aux fautes...

Puis, par un procédé itératif, on détermine les caractéristiques de tolérance aux fautes de l'architecture de capteurs, actionneurs, fonctions dite architecture fonctionnelle

Dans l'étape b), on détermine automatiquement l'ensemble des fonctions pour lesquelles les exigences de tolérance aux fautes ne sont pas entièrement spécifiées, c'est à dire celles pour lesquelles des sorties ont été affectées de caractéristiques de tolérance et qui n'ont pas encore été traitées dans une des étapes précédentes,

Dans une étape c), pour chaque fonction de l'ensemble calculé en b), on procède à une analyse spécifique pour déterminer :
i) quelles sont les entrées sur lesquelles les caractéristique de tolérance aux fautes doivent être exigées,
ii) quelle est l'exigence de tolérance aux fautes sur ladite fonction,

On procède à l'itération suivant par exemple 907 et 911, et on itère ainsi les étapes b) puis c) jusqu'à ce que l'ensemble déterminé à l'étape b) soit vide.

Dans l'étape e), chaque capteur hérite du niveau de tolérance aux fautes de sa donnée émise de plus haut niveau de tolérance aux fautes.

Puis, étape 931, pour chaque fonction, on choisit un mode de réalisation et on collecte les exigences de liberté entre réplicats conformément à ce qui a été décrit en regard des figures 3, 4 et 5.

Finalement, on place l'architecture fonctionnelle sur une architecture matérielle candidate 933 et l'on vérifie 935 que les conditions de liberté sur les réplicats, ces conditions ayant été raffinées lors du placement, sont toujours satisfaites. Dans le contexte d'une approche probabiliste, on vérifie que les probabilités de liberté sont satisfaite après placement à l'instar de l'exemple donné en dans la description de la figure 3.

Ce procédé peut être mis en oeuvre à l'aide d'un outil informatique permettant l'édition des différents objets nécessaires à la conception et l'automatisation partielle des différentes étapes du procédé constitué par l'invention.

Le procédé de l'invention peut être programmé sur un article de commerce comportant une mémoire lisible par un ordinateur, par exemple un CD, DVD ou équivalent ou sur le disque dur d'un ordinateur. Un tel programme pour le procédé sera exécutable par un ordinateur, et sera enregistré sur ladite mémoire pour être exécuté par ledit ordinateur.

## Revendications

1. Procédé de conception d'un système tolérant aux fautes **caractérisé en ce que** :
les exigences de tolérance aux fautes sont déterminées itérativement pour chaque fonction suivant les étapes:
a) pour spécifier des niveaux de tolérance aux fautes aux différents actionneurs du système,
b) pour déterminer automatiquement l'ensemble des fonctions pour lesquelles les exigences de tolérance aux fautes ne sont pas entièrement spécifiées, c'est à dire celles pour lesquelles des sorties ont été affectées de caractéristiques de tolérance et qui n'ont pas encore été traitées dans une des étapes précédentes,
c) pour chaque fonction de l'ensemble calculé en (b), pour procéder à une analyse spécifique pour déterminer:
i) quelles sont les entrées sur lesquelles les caractéristiques de tolérance aux fautes doivent être exigées,
ii) quelle est l'exigence de tolérance aux fautes sur ladite fonction,
d) pour itèrer les étapes b) puis c) jusqu'à ce que l'ensemble déterminé à l'étape b) soit vide; et
e) pour placer sur une architecture matérielle une architecture fonctionnelle résultant de l'analyse de tolérance aux fautes.

2. Procédé selon la revendication 1, **caractérisé en ce que** pour chaque faute on met en oeuvre une mesure corrective spécifique visant à réduire sa probabilité d'occurrence et/ou de nuisance.

3. Procédé selon la revendication 1 ou 2, **caractérisé en ce que** on vérifie que ladite architecture matérielle satisfait bien aux exigences de tolérance aux fautes des différents capteurs, actionneurs et fonctions mis en oeuvre ou, de manière duale, déduire dudit placement les exigences de tolérance aux fautes sur les composants de l'architecture matérielle qui devront alors être redondés de manière idoine.

4. Procédé selon l'une quelconque des revendications 1 à 3, **caractérisé en ce que**, dans la gestion des exigences de tolérance aux fautes, on ignore la prise en compte du facteur temps, bien que le procédé puisse être réalisé en temps-réel et de préférence en temps-réel dur.

5. Procédé selon l'une quelconque des revendications 1 à 4, **caractérisé en ce qu'**on l'applique à la conception ou au diagnostic d'un système électrique/électronique prévu pour équiper un véhicule automobile.

6. Procédé selon l'une quelconque des revendications 1 à 5, **caractérisé en ce que**, dans le cadre d'un placement sur une architecture matérielle de l'architecture fonctionnelle résultant de l'analyse de tolérance aux fautes, on respecte les exigences de liberté, les éléments placés devant satisfaire aux mêmes exigences de liberté que les éléments avant placement.

7. Procédé selon l'une quelconque des revendications 1 à 6, **caractérisé en ce que** on utilise des réplicats des différents objets pour vérifier que les conditions de liberté sont satisfaites.

8. Procédé selon l'une quelconque des revendications 1 à 7, **caractérisé en ce que**,
i) étant donnée une exigence de tolérance aux fautes sur l'architecture fonctionnelle et une mise en oeuvre de cette tolérance aux fautes, notamment par des copies, pour au moins un flot de données et/ou au moins une fonction et/ou au moins un capteur et/ou au moins un actionneur, et étant donné un placement de l'architecture fonctionnelle sur une architecture matérielle comportant des calculateurs et une connectique,
ii) pour au moins un flot de données et/ou au moins une fonction, on détermine s'il existe un défaut des composants après placement du fonctionnel sur le matériel pouvant affecter deux copies d'un même composant, auquel cas le placement ne satisfait pas les exigences de tolérance aux fautes.

9. Procédé selon l'une quelconque des revendications 1 à 8, **caractérisé en ce que**,
i) étant donnée une exigence de tolérance aux fautes sur l'architecture fonctionnelle et une mise en oeuvre de cette tolérance aux fautes, notamment par des copies, pour au moins un flot de données et/ou au moins une fonction et/ou au moins un capteur et/ou au moins un actionneur, et étant donné un placement de l'architecture fonctionnelle sur une architecture matérielle comportant des calculateurs, une connectique et des caractéristiques de tolérance aux fautes de ces composants,
ii) pour au moins un flot de données et/ou au moins une fonction, on détermine si on a placé plus de copies sur un composant que son niveau de tolérance aux fautes ne peut supporter.

10. Un article de commerce comportant une mémoire lisible par un ordinateur, un programme exécutable par un ordinateur étant enregistré sur ladite mémoire pour la conception d'un système tolérant aux fautes, **caractérisé en ce que** le programme inclut un codage pour:
a) spécifier des niveaux de tolérance aux fautes aux différents actionneurs du système,
b) déterminer automatiquement l'ensemble des fonctions pour lesquelles les exigences de tolérance aux fautes ne sont pas entièrement spécifiées, c'est à dire celles pour lesquelles des sorties ont été affectées de caractéristiques de tolérance et qui n'ont pas encore été traitées dans une des étapes précédentes,
c) pour chaque fonction de l'ensemble calculé en (b), analyser de façon spécifique pour déterminer:
i) quelles sont les entrées sur lesquelles les caractéristiques de tolérance aux fautes doivent être exigées,
ii) quelle est l'exigence de tolérance aux fautes sur ladite fonction; et
iii) on itère les étapes b) puis c) jusqu'à ce que l'ensemble déterminé à l'étape b) soit vide.

11. Un outil informatique programmé à la conception et/ou à l'automatisation des étapes du procédé selon l'une quelconque des revendications 1 à 9 ou programmé en utilisant un article de commerce selon la revendication 10.
